# EUROPÄISCHE PATENTANMELDUNG

(11) **EP 1 227 240 A2**
(43) Veröffentlichungstag der Anmeldung: **31.07.2002**
(21) Anmeldenummer: 01250428.8
(22) Anmeldetag: 03.12.2001
(51) Int. Cl.: F02M 25/12, F02D 19/08

(54) **Vorrichtung zur Erzeugung von Wasserstoff in Kraftfahrzeugen**

(30) Priorität: 01.12.2000 DE 20020836 U
(71) Anmelder: Ahmet Ogras, 10827 Berlin (DE)
(72) Erfinder: Ahmet Ogras, 10827 Berlin (DE)
(74) Vertreter: Scholz, Hartmut, Dipl.-Ing. Patentanwalt

(57) **Zusammenfassung**

Vorrichtung zum Betrieb eines Fahrzeugs mit einer mit herkömmlichen, fossilen Kraftstoffen betriebenen Brennkraftmaschine, bei der der Brennkraftmaschine ein Elektrolyse-Reaktor (14) zugeordnet ist. Der Elektrolyse-Reaktor (14) ist durch die Brennkraftmaschine antreibbar und der Elektrolyse-Reaktor (14) führt dem herkömmlichen, fossilen Kräftstoff der Brennkraftmaschine durch Elektrolyse von Wasser im Fahrzeug produzierten Wasserstoff/Sauerstoffgemisch als zusätzlichen Kraftstoff zu.

## Beschreibung

Die Erfindung betrifft eine Vorrichtung zum Betrieb eines Fahrzeugs, mit einer mit herkömmlichen, fossilen Kraftstoffen betriebenen Brennkraftmaschine.

Die Kraftstoffe, die in herkömmlichen Verbrennungsmotoren Verwendung finden, werden aus Erdöl und dessen Derivaten hergestellt. Da die Erdölreserven begrenzt sind, sind Motorenentwickler gezwungen wirtschaftlichere Verbrennungsmaschinen zu konstruieren. Ein Großteil der bereits vorhandenen Verbrennungsmaschinen kann nachträglich so umgebaut werden, daß eine spürbare Senkung im Verbrauch von fossilen Kraftstoffen zu erreichen ist. Eine gangbare Möglichkeit ist der Einsatz von Wasserstoff in Verbrennungsmotoren.

Die Erfindung betrifft ein System zur Erhöhung der Effizienz von Verbrennungsmotoren, die mit einer Reduzierung der bei der Verbrennung entstehenden Schadstoffen und Brennstoffeinsparung einher geht.

Durch das Einleiten von Wasserstoff in den Verbrennungsvorgang wird eine Leistungserhöhung der Verbrennungsmaschine erzielt. Eine derartige Vorrichtung ist aus der DE 38 28 764 A1 bekannt. In der DE 24 47 822 A1 ist eine Gasmischung beschrieben, die für den Einsatz in Verbrennungsmotoren vorgesehen ist und dies Gasmischung mittels der Elektrolyse von Wasser hergestellt wird. In der DE 1 467 060 ist eine Vorrichtung für die Herstellung von Wasserstoff und Sauerstoff durch Elektrolyse beschrieben. Auch aus der EP 0 422 994 A1 ist eine Vorrichtung für die Herstellung von Knallgas mittels der Elektrolyse vom Wasser bekannt. Aus der GB 2 029 447 ist eine Vorrichtung für die Herstellung von Wasserstoff und Sauerstoff durch die Elektrolyse von Wassers, für einen Verbrennungsmotor bekannt.

Die erwähnten Vorrichtungen benötigen für die Elektrolyse von Wasser eine externe Stromversorgung. Gewöhnlich ist dies eine im Fahrzeug befindlichen Batterie. Bei einer Erhöhung des Stromes wird die Leistung der Elektrolysevorrichtung deutlich herabsetzt. Des Weiteren ist es nicht ausgeschlossen, daß sauer und/oder basisch reagierende Salze mit dem gesättigten Wasserdampf in den Motor geraten und diesen schädigen. Das Nachrüsten von Altfahrzeugen auf reinen Wasserstoffbetrieb ist sehr aufwendig und kostenintensiv. Auch ist der Betrieb solcher Fahrzeuge in der Praxis nicht ganz unproblematisch.

Aufgabe der vorliegenden Erfindung ist es, eine Vorrichtung zur Verfügung zu stellen, die die Risiken bei der Vorhaltung von Wasserstoff minimiert, den Kraftstoffverbrauch konventioneller Verbrennungsmaschinen senkt und auch in Altfahrzeugen mit konventionellen Verbrennungsmaschinen nachgerüstet werden kann.

Gelöst wird diese Aufgabe durch die Merkmale des Anspruchs 1, insbesondere durch einen Elektrolyse-Reaktor der einer Verbrennungsmaschine zugeordnet ist, der Elektrolyse-Reaktor durch die Brennkraftmaschine antreibbar ist und der Elektrolyse-Reaktor dem herkömmlichen, fossilen Kraftstoff der Brennkraftmaschine durch Elektrolyse von Wasser im Fahrzeug produzierten Wasserstoff/Sauerstoffgemisch als zusätzlichen Kraftstoff zuführt. Ferner ist es vorgesehen, daß das Wasserstoff/Sauerstoffgemisch in Abhängigkeit vom Lastzustand der Verbrennungsmaschine bedarfsorientiert erzeugt wird.

Durch diese Maßnahmen wird eine Vorrichtung geschaffen, bei der die Vorratshaltung von Wasserstoff entfällt. Im Falle eines Verkehrsunfalls werden keine - wenn überhaupt - großen Mengen Wasserstoff freigesetzt. Der Wirkungsgrad konventioneller Verbrennungsmaschinen wird erhöht. Der Kraftstoffverbrauch wird gesenkt.

Statt wie üblich für die Elektrolyse die Stromleistung zu erhöhen, wir bei der vorliegenden Erfindung die Spannung in Abhängigkeit vom Lastzustand der Verbrennungsmaschine erhöht. Dies geschieht mit einem Mikroprozesor gesteuerten Spannungswandler. Die Bordnetzspannung wird dabei um das ca. 2-fache angehoben. Der Spannungswandler arbeitet dabei proportional zum Lastzustand und der Drehzahl der Verbrennungsmaschine und wird von diesen Faktoren beeinflußt. Durch ein Drehzahlsignal wird die Mikroprozessorschaltung aktiviert. Diese ist als eine sog. Elektronic Control Unit (ECU) ausgebildet. Sie steuert die Versorgung des Elektolyse-Reaktors mit Wasser - vorzugsweise Trinkwasser - und regelt Stromaufnahme des Reaktors. Die Steuerung riegelt die Stromversorgung bei Höchstdrehzahl runter und/oder ab. Bei einem Fehler im System wird durch die Steuerung ein Warnsignal, akustisch und/oder optisch an den Fahrzeuglenker geleitet.

In den aus einem hitzebeständigen Kunststoff bestehenden, doppelwandigen, rechteckigen Elektrolysereaktor wird Wasser eingefüllt. Dies geschieht über die Deckelöffnung. Während des Betriebes mittels einer Wasserpumpe, die frisches Wasser aus einem Vorratsbehälter über eine Rohrleitung dem Elektrolyse-Reaktor zuführt. Die Eintrittsöffnung kann mit einem Rückschlagventil gesichert sein, um das Eindringen von Gas in den Vorratsbehälter zu verhindern. Für den notwendigen Druckausgleich im Elektrolyse-Reaktor ist eine Druckventil/Luftfilterkombination vorgesehen. Die Überwachung des Wasserstandes und die Regelung der Kühlung (mittels eines an den Elektolyse-Reaktors angeschlossenen Wärmetauschers) übernehmen Mikroprozessor-Schaltungen. Hierbei werden die Soll und'Ist Werte abgefragt und ständig miteinander verglichen und gegebenenfalls den Soll - Werten angepaßt. Dafür sind ein Wärmesensor und ein Wasserstandssensor am bzw. im Elektrolyse-Reaktor vorgesehen. Der Wasserstandsmesser ist ein bevorzugt aus Kupfer gefertigter Stab, der in die Bodenplatte des Elektolyse-Reaktors eingelassen ist.

Die für die Elektrolyse verwendete Kathode ist bevorzugt eine rechteckige Graphitkathode, in den vorliegenden Beispiel mit den Maßen 140x90 10mm. Die verwendete Anode besteht bevorzugt aus einem platinierten Mischoxidtitangitter. In den vorliegenden Beispiel mit den Maßen 130x80x1,8mm. Die Maschenlänge beträgt ca. 10mm, die Maschenlänge ca. 5mm.

Das bei der Elektrolyse entstehende Gasgemisch, wird durch eine als Radiallüfter ausgebildete Vakuumpumpe über ein Rohrleitungssystem, der mittels der Abgaswärme gefahrenen Trocknung zugeführt. Die Vakuumpumpe ist an eine 12 Volt Stromquelle angeschlossen. Sie ist dem Deckel des Elektrolyse-Reaktors zugeordnet. Anschließend wird das Gasgemisch in den Gasgemischverteiler gedrückt, dessen Anzahl von Abgängen sich nach der Zylinderzahl der Verbrennungsmaschine richtet. Das Gasgemisch wird auf die einzelnen Gasgemischdüsen verteilt und direkt in die Ansaugkrümmer der Zylinder der Verbrennungsmaschine eingeleitet. Bei Verbrennungsmaschinen mit Turboaufladung wird das Gasgemisch vor den Turbolader eingeleitet. Bei Fahrzeugen mit einer Lambda-Regelung wird das Gasgemisch vor dem Luftmengenmesser in des Ansaugtacktes eingeleitet.

Durch diese Maßnahmen wird ein Verbrennungsmotor geschaffen, der eine Kraftstoffersparnis von ca. 30 % gegenüber vergleichbaren Verbrennungsmaschinen ermöglicht. Das gesamte Schadstoffverhalten des Abgases wird positiv beeinflußt.

Weitere vorteilhafte Maßnahmen sind in den Unteransprüchen beschrieben. Die Erfindung ist in den beiliegenden Zeichnungen dargestellt und wird nachfolgend näher beschrieben; es zeigt:
- **Figur 1**: die schematische Darstellung der gesamten Vorrichtung;
- **Figur 2**: schematische Darstellung der Anoden- und Kathodeanordnung;
- **Figur 3**: schematische Darstellung der Wasserstoffzuführdüse;
- **Figur 4**: die Darstellung der Wasserstoffzuführdüse im Schnitt entlang der Linie A-A.

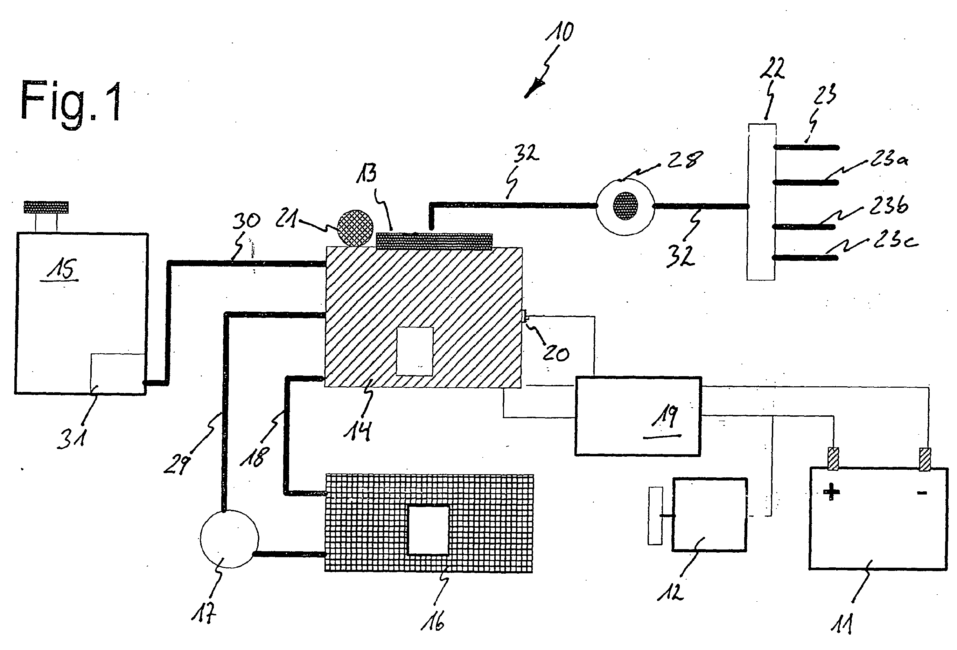

Die in der Figur 1 dargestellte Vorrichtung 10 besteht im wesentlichen aus dem Elektrolysereaktor 14, der über die Steuereinheit 19 regelbar ist. Diese ist direkt mit der Fahrzeugbatterie 11 verbunden. Die Lichtmaschine 12 kann zwischen geschaltet sein. Für die Temperaturüberwachung des Elektrolyse-Reaktors 14 ist ein Temperatursensor 20 vorgesehen, der mit der Steuerelektronik 19 verbunden ist. Durch einen Vorlauf 29 und einen Rücklauf 18 ist der Elektrolyse-Reaktor 14 mit dem Radiator 16 verbunden.

Die Kühlflüssigkeit wird mittels einer im Vorlauf 29 befindlichen Pumpe 17 im Kreislauf geführt und durch die Steuerelektronik 19 bei bedarf aktiviert. Die Flüssigkeitsversorgnug des Elektrolyse-Reaktors 14 während des Betriebs, geschieht mittels eines Vorratsbehälters 15. Von hier aus wird die Flüssigkeit, vorzugsweise Trinkwasser, durch eine Pumpe 31 über eine Rohrleitung 30 direkt in den Elektrolyse-Reaktor 14 eingeleitet.

Das bei der Elektrolyse entstehende Gasgemisch wird mittels einer Vakuumpumpe 13 in die Druckgasleitung 32 gepumpt. Das noch nasse Gas wird dabei der Trocknung 28 zugeführt. Das getrocknete Gas wird weiter an den Verteiler 22 geleitet, wo es auf die Verteilerdüsen 23, 23a, 23b, 23c verteilt wird, die den nicht dargestellten Ansaugtrakten der Verbrennungsmaschinen zugeordnet sind.

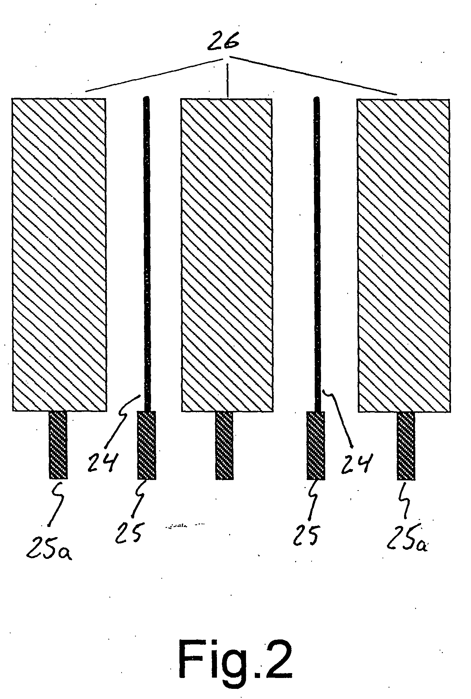

Figur 2 zeigt die rechteckige, gitterartig ausgebildete platinierte Mischoxidtitananode 24, mit den ihr zugeordneten kupfernen Befestigungsbolzen 25. Des Weiteren zeigt die Figur 2 die rechteckige Graphitkathode 26, der kupferne Befestigungsbolzen 25a zugeordnet sind an der, wie bei den Befestigungsbolzen 15, eine Gleichspannung anlegbar ist. Die Graphitkathode 26 und die paltinierte Mischoxidtitananode 24 sind abwechselnd in das, nicht dargestellte, doppelwandige, hitzebeständige Hartplastikgehäuse des Elektrolyse-Reaktors 14 eingelassen.

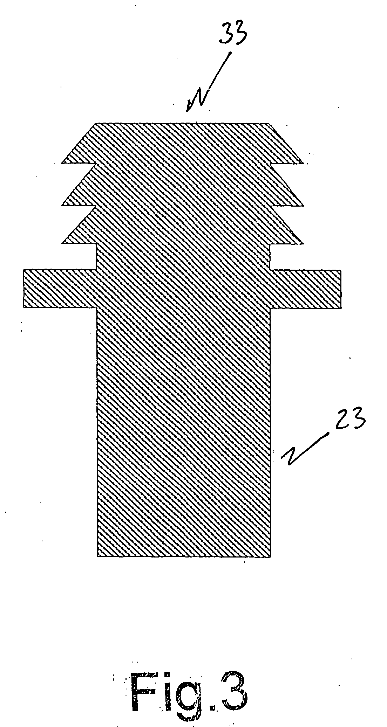

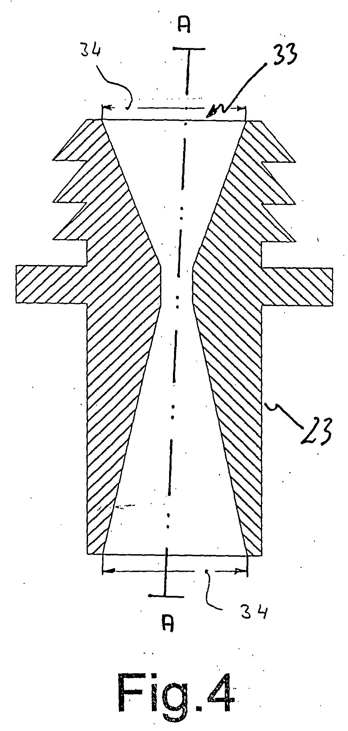

In der Figur 3 ist exemplarisch eine Verteilerdüsen 23/23c dargestellt. Diese verjüngen sich, wie in der Figur 4 ersichtlich, im Innendurchmesser, bis etwa 3/4 ihrer Gesamtlängen um mehr als die.Hälfte, um dann im Bereich des letzten 1/4 ihrer Gesamtlänge zum Austritt 33 hin sich zum lichten Innendurchmesser 34 zu weiten.

### Bezugszeichen

- 10: Vorrichtung
- 11: Fahrzeugbatterie
- 12: Lichtmaschine
- 13: Vakuumpumpe
- 14: Elektrolysereaktor
- 15: Vorratsbehälter
- 16: Radiator
- 17: Pumpe
- 18: Rücklauf
- 19: Steuerelektronik
- 20: Temperatursensor
- 21: Luftfilter
- 22: Verteiler
- 23,23a 23b,23c: Verteilerdüse
- 24: Anode
- 25,25a: Befestigungsbolzen
- 26: Kathode
- 27: Wasserstandsmesser
- 28: Trocknung
- 29: Vorlauf
- 30: Rohrleitung
- 31: Pumpe
- 32: Druckgasleitung
- 33: Austritt
- 34: Innendurchmesser

## Patentansprüche

1. Vorrichtung zum Betrieb eines Fahrzeugs mit einer mit herkömmlichen, fossilen Kraftstoffen betriebenen Brennkraftmaschine, **dadurch gekennzeichnet, daß** der Brennkraftmaschine ein Elektrolyse-Reaktor (14) zugeordnet ist, der Elektrolyse-Reaktor (14) durch die Brennkraftmaschine antreibbar ist und der Elektrolyse-Reaktor (14) dem herkömmlichen, fossilen Kraftstoff der Brennkraftmaschine durch Elektrolyse von Wasser im Fahrzeug produzierten Wasserstoff/Sauerstoffgemisch als zusätzlichen Kraftstoff zuführt.

2. Vorrichtung nach Anspruch 1, **dadurch gekennzeichnet, daß** der Elektrolyse-Reaktor (14) den Wasserstoff in Abhängiskeit vom Verbrennungsprozess in der Brennkraftmaschine bedarfsorientiert durch Elektrolyse von Wasser erzeugt.

3. Vorrichtung nach den Ansprüchen 1 oder 2, **gekennzeichnet durch** eine Steuerelektronik (19) über die Drehzahl so regelbar ist, daß im Leerlauf an einer Anode (24) 2,5 Volt anliegen, und die Spannung sich mit zunehmender Drehzahl erhöht und bei maximaler Höchstdrehzahl der Verbrennungsmaschine die Steuerelektronik (19) die Spannung an der Anode 24 abregelt.

4. Vorrichtung nach den Ansprüchen 1 bis 3, **dadurch gekennzeichnet, daß** die Steuerelektronik (19) ein Mikroprozessoreinheit ist.

5. Vorrichtung nach den. Ansprüchen 1 bis 4, **dadurch gekennzeichnet, daß** der Elektrolysereaktor (14) ein aus hitzebeständigen, doppelwandigen Hartplastik gefertigter, rechteckiger Behälter ist, in dem Grahitkathoden (16) und platinierte Mischoxidtitananoden (14) in Reihe angeordnet sind.

6. Vorrichtung nach den Ansprüchen 1 bis 5, **dadurch gekennzeichnet, daß** eine Vakuumpumpe (13) das Gasgemisch in eine Druckgasleitung (32) pumpt, dabei das Gasgemisch einer Trocknung (28) zuführt und anschließend zu einem Verteiler (22) geleitet wird.

7. Vorrichtung nach den Ansprüchen 1 bis 6, **dadurch gekennzeichnet, daß** dem Verteiler (22) Verteilerdüsen (23 bis 23c) zugeordnet sind, die das Gasgemisch in den jeweiligen Ansaugkrümmern der einzelnen Zylinder einer Brennkraftmaschine einleiten.

8. Vorrichtung nach einem oder mehreren der Ansprüche 1 bis 7, **dadurch gekennzeichnet, daß** das in dem Elektrolyse-Reaktor (14) erzeugte Gasgemisch in den Ansaugkrümmer einer Brennkraftmaschine einleitbar ist.

9. Vorrichtung nach einem oder mehreren der Ansprüche 1 bis 8, **dadurch gekennzeichnet, daß** das in dem Elektrolyse-Reaktor (14) erzeugte Gasgemisch bei Turbobrennkraftmaschinen vor den Turbolader in die Ansaugzuleitung eingeleitet wird.

10. Vorrichtung nach einem oder mehreren der Ansprüche 1 bis 9, **dadurch gekennzeichnet, daß** bei geregelten Brennkraftsmaschinen mit Lambdasonde das Gasgemisch vor den Luftmengensensor eingeleitet wird.
